# EUROPÄISCHE PATENTANMELDUNG

(11) **EP 0 783 909 A2**
(43) Veröffentlichungstag der Anmeldung: **16.07.1997**
(21) Anmeldenummer: 97100034.4
(22) Anmeldetag: 03.01.1997
(51) Int. Cl.: B01D 3/06

(54) **Verfahren und Vorrichtung zum kontinuierlichen Eindampfen von zähflüssigen, zum Haften neigenden Lösungen und Suspensionen bis zur Trockenmasse**

(30) Priorität: 10.01.1996 DE 19600630
(71) Anmelder: BAYER AG, 51368 Leverkusen (DE)
(72) Erfinder: Casper, Clemens, Dr., 47809 Krefeld (DE); Grenner, Dieter, Dr., 51373 Leverkusen (DE); Hetzel, Hartmut, Dr., 50858 Köln (DE)

(57) **Zusammenfassung**

Die Viskosität der fließfähigen flüssigen Masse wird zunächst in einem Mehrphasenwendelrohr in Gegenwart einer mit hoher Geschwindigkeit strömenden Gasphase erhöht und anschließend unter Abtrennung der Gasphase auf ein gerührtes Bett aus festem körnigem Gut aufgebracht, wo sie in eine Feststoffmasse überführt wird.

## Beschreibung

Das Eindampfen bzw. Aufkonzentrieren von Lösungen und Suspensionen ist ein Prozeßschritt, der in der chemischen, pharmazeutischen und Lebensmittel-Industrie sehr häufig vorkommt. Hierzu werden in der Regel Rohrbündel- bzw. Platten-Wärmetauscher verwendet, die von der Lösung oder Suspension kontinuierlich durchströmt werden. Durch Wärmezufuhr verdampft ein Teil des Lösungsmittels bzw. der kontinuierlichen Phase der Suspension und wird am Austritt des Wärmetauschers als Brüden abgetrennt. Der Rohrbündel- bzw. Plattenwärmetauscher steht in der Regel senkrecht und wird von der Lösung oder Suspension von oben nach unten durchströmt.

Diese Apparate arbeiten sehr wirtschaftlich und zuverlässig, solange die Lösung oder Suspension dünnflüssig, d.h. gut fließfähig, ist und nicht zum Anbacken an die Wärmetauschflächen neigt.

Sind die Lösung bzw. Suspension zähflüssig oder werden ihnen so viele flüchtige Anteile entzogen, daß das entstehende Konzentrat zähflüssig wird bzw. zum Anhaften an der Wärmetauschfläche neigt, sind derartige Apparate nicht geeignet. Die Apparate arbeiten nur dann einwandfrei, wenn eine gleichmäßige Benetzung der Wärmetauschflächen sichergestellt ist. Ist dies nicht der Fall, bilden sich Anhaftungen auf den Wärmetauschflächen und die Apparate verstopfen.

Sollen diese zähen bzw. zum Anhaften neigenden Lösungen oder Suspensionen weiter eingedampft werden, muß durch mechanische Krafteinwirkung sichergestellt werden, daß die Wärmetauschflächen von Anhaftungen und Verkrustungen freigehalten werden. Dies wird dadurch erreicht, daß in der Regel rotierende Wischer oder Schaber in den Verdampferapparat eingebaut werden, die die Wärmetauschflächen freihalten. Sollte die einzudampfende Lösung oder Suspension einen pastösen oder sogar festen Zustand erreichen, sind hierzu nur schwere, weitgehend selbstreinigende Schneckenmaschinen geeignet, die jedoch sehr teuer sind und nur einen relativ geringen Wärmeübergangskoeffizienten besitzen.

In der US-A 3.550.669 ist ein Verdampfungsapparat beschrieben, bei dem die mechanische Krafteinwirkung zum Freihalten der Wärmtauschfläche nicht durch rotierende Einbauten, sondern durch Strömungskräfte bewirkt wird. Dieser Verdampfungsapparat besteht aus nur einem einzelnen, gewendelten Rohr, das von außen beheizt wird. Dieser Einrohrverdampfer wird nun so betrieben, daß die Lösung bzw. Suspension unter Druck überhitzt in den Apparat eingespeist wird, so daß bereits am Anfang des Apparates ein Teil der flüchtigen Bestandteile der Lösung bzw. Suspension ausdampfen. Dieser Dampf übernimmt die Funktion des Transportes der zäher werdenden Lösung bzw. Suspension durch den Apparat und sorgt für das Freihalten der Wärmetauschflächen. Der Apparat arbeitet dabei selbstregulierend, da mit zunehmender Konzentration der Lösung bzw. Suspension und damit steigender Zähigkeit und Haftneigung auch die Dampfgeschwindigkeit und somit die Strömungskräfte zunehmen. Die erzielbaren Wärmeübergangskoeffizienten sind ungewöhnlich hoch.

Wegen der ständigen Anwesenheit einer flüssigen und einer dampfförmigen Phase im Apparat wird dieser mit Mehr-Phasen-Wendelrohr (MPW) bezeichnet. Dieses MPW arbeitet so effektiv, daß damit die einzudampfenden Lösungen oder Suspensionen so weit aufkorzentriert werden können, bis sie einen teigigen, pastösen Zustand annehmen. Durch die im MPW herrschenden hohen Dampfgeschwindigkeiten und den damit erzeugten Scherkräften gelingt es zuverlässig, die Wärmetauschflächen freizuhalten.

Problematisch wird der Eindampfprozeß dann, wenn der Stoffstrom Konzentrat/Dampf das MPW verläßt und die Brüden abgetrennt werden. In diesem Moment entfallen die Scherkräfte durch die Dampfströmung.

Üblicherweise mündet das MPW in einem konischen Behälter, der auch als Zyklon ausgebildet sein kann, in dem das Konzentrat nach unten abfließt und die dampfförmigen Brüden nach oben abgezogen werden.

Den Flüssigkeitsaustrag aus dem konischen Behälter und damit auch den Druckaufbau auf Umgebungsdruck, falls der Eindampfprozeß im Vakuum abgelaufen ist, übernimmt eine Verdrängerpumpe, z.B. Zahnradpumpe, die für die Förderung von zähen Stoffen gut geeignet ist.

Das System MPW-Brüdenabscheider kann nur funktionieren, solange das Konzentrat der Zahnradpumpe frei zufließt und nicht an den Abscheiderwänden anhaftet. Hier wird also die Eindampfrate (gleich erzielbare Aufkonzentrierung) nicht durch den Verdampfer, sondern durch die Trennvorrichtung Konzentrat/Brüden eingeschränkt, das MPW kann somit gar nicht optimal betrieben bzw. voll ausgenutzt werden.

Es wurde daher auch bereits vorgeschlagen, die Trennung von Konzentrat und Brüden in einem Apparat vorzunehmen, bei dem die Wandflächen mechanisch abgereinigt werden (US-A 5.256.707). Dies erfolgt in einem zweiten Strömungsrohr mit mindestens 50-fach größerem Strömungsquerschnitt, das entweder als Drehrohr mit selbstreinigender Messerwelle oder als selbstreinigender Paddelschneckenapparat ausgebildet ist. Diese technisch aufwendigen Maschinen bieten den Vorteil, daß in ihnen der Eindampfprozeß noch weitergeführt werden kann, wobei das pastenförmige Konzentrat gegebenenfalls bis zur Trockensubstanz aufkonzentriert werden kann. Nachteilig dabei ist einerseits die gleichsinnige Strömungsrichtung von pastenförmigem Konzentrat bzw. Trockensubstanz und Brüden. Dadurch besteht die Gefahr, daß Stoffteilchen in flüssiger oder fester Form von den Brüden mitgerissen werden können. Die Gefahr wird dadurch verstärkt, daß die rotierenden Einbauten die Konzentratpartikel in den Brüdenstrom aufwirbeln. Ein Nachteil ist ferner darin zu sehen, daß das gesamte pastenförmige Konzentrat zunächst auf die inneren Oberflächen des zweiten Strömungsrohres aufgebracht wird und anschließend wieder abgereinigt werden muß. Während des Abreinigens entstehen aber insbesondere bei der Eindampfung bis zur Trockensubstanz Granulate sehr unterschiedlicher Teilchengröße, insbesondere auch sehr kleiner Teilchengröße, die von den Brüden besonders leicht mitgerissen werden.

Aufgabe der vorliegenden Erfindung ist es daher, ein Verfahren und eine Vorrichtung zum kontinuierlichen Überführen einer fließfähigen flüssigen Masse in eine Feststoffmasse unter Einsatz eines Mehr-Phasen-Wendelrohres zur Verfügung zu stellen, wobei die Feststoffmasse in Form von relativ gleichmäßigen Granulaten anfällt und wobei die als Transportmedium im Mehrphasenrohr eingesetzte Gasphase im wesentlichen ohne Einschluß von Feststoffpartikeln von der Feststoffmasse abgetrennt werden kann.

Es wurde gefunden, daß die Aufgabe dadurch gelöst werden kann, daß die aus dem Mehr-Phasen-Wendelrohr austretende noch fließfähige flüssige Masse auf ein gerührtes Bett aus festem körnigen Gut aufgebracht wird.

Gegenstand der vorliegenden Erfindung ist ein Verfahren zum kontinuierlichen Überführen einer fließfähigen flüssigen Masse in eine Feststoffmasse, wobei die Viskosität der flüssigen Masse in einer ersten Stufe in einem an sich bekannten Mehr-Phasen-Wendelrohr in Gegenwart einer mit hoher Geschwindigkeit strömenden Gasphase erhöht wird und in einer zweiten Stufe in die Feststoffmasse überführt und die Gasphase abgetrennt wird, das dadurch gekennzeichnet ist, daß die flüssige Masse im Anschluß an den Austritt aus dem Mehr-Phasen-Wendelrohr auf ein gerührtes Bett aus festem körnigen Gut aufgebracht wird, der Gasraum über dem gerührten Bett einen mindestens 200-fach größeren Strömungsquerschnitt aufweist als das Wendelrohr und Gasphase und Feststoffphase getrennt aus dem Gasraum bzw. dem Bett abgezogen werden. Der Durchmesser der Oberfläche des gerührten Bettes ist vorzugsweise mindestens 20-mal größer als der Austrittsdurchmesser des Wendelrohres.

Vorzugsweise weist das gerührte Bett ein Volumen auf, das mindestens 30 % der stündlich erzeugten Feststoffmasse entspricht. Dabei hat das gerührte Bett vorzugsweise eine Tiefe, die 30 bis 70 % des Durchmessers beträgt. Insbesonders bevorzugt wird ein zylindrischer Behälter eingesetzt, dessen Höhe 80 bis 150 % seines Durchmessers entspricht. Der Behälter kann zu 30 bis 70 % mit dem festen kornigen Gut gefüllt sein, wobei der Raum oberhalb des festen körnigen Gutes den Gasraum bildet, in den das Mehrphasenrohr mündet und in dem die Trennung von Gasphase und Feststoffphase unter Reduktion der Gasgeschwindigkeit erfolgt. Der Austrag der Feststoffmasse erfolgt vorteilhaft über einen seitlichen Überlauf, der in Form eines am Behalter seitlich angeflanschten Rohres, dessen Achse etwa in Höhe des Feststoffniveaus im Behälter liegt, ausgebildet sein kann.

Der Abzug der Gasphase erfolgt vorzugsweise über ein auf dem Deckel des Behalters montiertes Gasabzugsrohr, dessen Durchmesser zur Gewährleistung niedriger Gas-Strömungsgeschwindigkeiten möglichst groß gewählt werden sollte. Bevorzugt entspricht der Durchmesser des Gasabzugsrohres mindestens dem 7-fachen des Durchmessers des Wendelrohres.

Die Achse der Austrittsöffnung des Wendelrohres in den Gasraum des Behälters ist vorzugsweise so gerichtet, daß sie keine Richtungskomponente in Strömungsrichtung der Gasphase zum Gasabzug aufweist, d.h. daß das mit hoher Geschwindigkeit aus dem Mehr-Phasen-Wendelrohr einströmende Gas mindestens einen Winkel von 90° mit der im Gasraum des Behälters herrschenden Strömungsrichtung bildet. Vorzugsweise beträgt der Winkel zwischen Einströmrichtung aus dem Mehr-Phasen-Wendelrohr und der Strömungsrichtung im Gasraum 120 bis 180°.

Ferner ist die Achse der Austrittsöffnung des Wendelrohres in Richtung auf die Oberfläche des gerührten Bettes gerichtet, wobei der Winkel zwischen Achse der Austrittsöffnung und Oberfläche des gerührten Bettes 45 bis 90° betragen kann.

Die Austrittsöffnung des Wendelrohres wird so weit oberhalb der Oberfläche des gerührten Bettes positioniert, daß bis zum Auftreffen des eintretenden Gasstrahles dieser so viel kinetische Energie verloren hat, daß die Oberfläche des gerührten Bettes nicht zu stark aufgewirbelt wird und andererseits die von dem Gasstrahl mitgeführten Teilchen der noch fließfähigen flüssigen Masse mit hoher Viskosität nicht an die nicht vom gerührten Bett überdeckte Behälterwand geschleudert werden.

Die Umwälzung des gerührten Bettes erfolgt vorzugsweise durch wandgängige Rühranne, die vollständig vom gerührten Bett überdeckt sind und die das körnige Gut am Behälterrand nach oben fördern, so daß eine toroidartige Umwälzung des gerührten Bettes realisiert wird.

Weitere Parameter des erfindungsgemäßen Verfahrens ergeben sich aufgrund der Anwendung des Verfahrens für spezielle Einsatz- und Endprodukte und den Bedingungen, unter denen die eingesetzte fließfähige flüssige Masse in eine Feststoffmasse überführbar ist.

Vorzugsweise wird das erfindungsgemäße Verfahren zur Eindampfung von Lösungen und/oder Suspensionen zur Trockenmasse eingesetzt. Dabei wird das Mehr-Phasen-Wendelrohr auf eine Temperatur oberhalb der Verdampfungstemperatur des Losungsmittels bzw. des Suspensionsmediums geheizt, wobei die mit hoher Geschwindigkeit strömenden Gase zumindest teilweise aus dem im Mehr-Phasen-Wendelrohr verdampfenden Lösungsmittel bzw. Suspensionsmedium bestehen. Zur Realisierung der für den Transport der fließfähigen flüssigen Masse im Wendelrohr erforderlichen hohen Gasgeschwindigkeit, die auch von der Viskosität der Masse am Austritt des Wendelrohr abhängt, kann zusätzlich ein Inertgas, das auch aus einer zusätzlichen Lösungsmittelmenge bestehen kann, in das Wendelrohr eingespeist werden. Im allgemeinen sind Gasströmungsgeschwindigkeiten von 20 bis mehrere 100 m pro Sekunde erforderlich, insbesondere zwischen 50 m pro Sekunde und Schallgeschwindigkeit. Die weitere Eindampfung bis zur Trockenmasse erfolgt nach dem Aufbringen der fließfähigen flüssigen Masse mit erhöhter Viskosität auf das gerührte Bett, das ebenfalls auf einer Temperatur oberhalb der Verdampfungstemperatur des Lösungsmittels bzw. des Suspensionsmediums gehalten wird. Zur Aufrechterhaltung der Temperatur des gerührten Bettes ist eine Mantelbeheizung des Behälters ausreichend. Aufgrund der wandgängigen Umwälzung des Bettes unter Erzeugung einer toroidförmigen Bewegung des körnigen Gutes wird ein ausreichender Temperaturausgleich im geruhrten Bett gewährleistet.

Das Lösungsmittel bzw. Suspensionsmedium kann nach Abzug aus dem Behälter kondensiert und zurückgewonnen werden.

Wird das erfindungsgemäße Verfahren eingesetzt, um den Trockenmasseanteil der fließfähigen flüssigen Masse zu deponieren, kann als festes körniges Gut zur Ausbildung des Bettes ein Inertmaterial vorgelegt werden, das auch kontinuierlich zugeführt wird und das als Trägermaterial für die erhaltene Trockenmasse dient. Vorzugsweise wird als festes korniges Gut jedoch ein Material eingesetzt, das der erhaltenen Trockenmasse entspricht, z.B. erfindungsgemäß vorher erzeugte Trockenmasse, so daß sich das Bett ohne getrennte Zuführung von Feststoffteilchen ständig regeneriert.

Vorzugsweise wird im Gasraum über dem gerührten Bett ein Druck von weniger als 1 bar absolut, insbesondere bevorzugt weniger als 0,01 bar, weiterhin bevorzugt unterhalb 0,03 bar aufrechterhalten. Durch einen geringen Gasdruck im Gasraum wird insbesondere die Abscheidung der viskosen Partikel aus dem geruhrten Bett begunstigt, weil sich in der Gasphase keine hochenergetischen Wirbelströmungen, die gegebenenfalls viskose Partikel mitreißen könnten, ausbilden können. Der Austrag der Feststoffpartikel erfolgt daher vorzugsweise über eine den Unterdruck gewährleistende Gasschleuse, z.B. eine Zellradschleuse.

Das erfindungsgemäße Verfahren ist jedoch nicht auf die Eindampfung von Lösungen und/oder Suspensionen zur Trockenmasse beschränkt. Vielmehr ist es eberfalls möglich, Polymerisationsreaktionen unter Erzeugung fester Granulate mit und ohne Gasfreisetzung durchzuführen.

Die Erfindung wird nachfolgend anhand der beigefügten Figuren 1 bis 5 näher erläutert:
- Fig. 1: zeigt das Gesamtschema einer erfindungsgemäßen Anlage zur Eindampfung von Lösungen und/oder Suspensionen zur Trockenmasse.
- Fig. 2: zeigt eine Aufsicht auf die erfindungsgemäße Vorrichtung.
- Fig. 3: zeigt einen Schnitt A-A durch die Vorrichtung gemäß Fig. 2.
- Fig. 4: zeigt einen Schnitt B-B durch die Vorrichtung gemäß Fig. 2.
- Fig. 5: zeigt einen vertikalen Schnitt durch eine alternative erfindungsgemäße Vorrichtung.

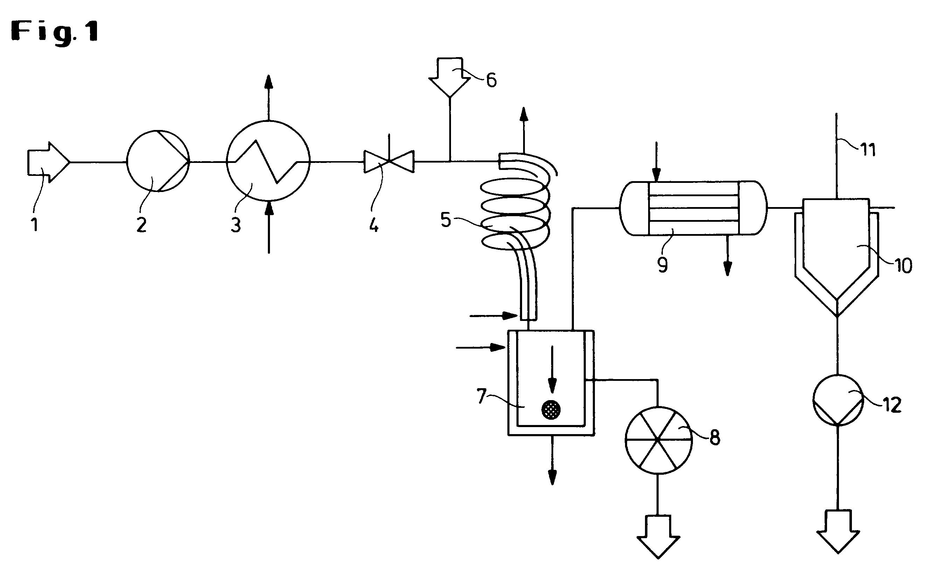

Bei einer Anlage gemäß Fig. 1 wird in Richtung des Pfeils 1 eine Suspension oder Lösung einer Pumpe 2 zugeführt und auf einen durch ein Drosselventil einstellbaren Druck gebracht, im Wärmeaustauscher 3 vorgeheizt und durch das Drosselventil 4 in das Wendelrohr 5 entspannt. Gegebenenfalls wird, wie durch Pfeil 6 angedeutet, eine zusätzliche Inertgasmenge in das Wendelrohr 5 eingespeist. Im Wendelrohr 5 fließt die Lösung bzw. Suspension an der Wand unter der Wirkung des mit hoher Geschwindigkeit strömenden Gases, d.h. des gegebenenfalls bereits verdampften Lösungsmittels bzw. Suspensionsmediums und gegebenenfalls Zusatzgas, wobei aufgrund des guten thermischen Kontaktes der viskosen Flüssigkeit mit der Wandung des Wendelrohrs 5 das Lösungsmittel bzw. Suspensionsmedium weiter verdampft. In der viskosen Flüssigkeit eingeschlossene Gasblasen werden aufgrund der herrschenden Zentrifugalkräfte aus der viskosen Flüssigkeit herausgedrückt und evtl. sich ablösende Tropfen erneut an die Wandung geschleudert. Die weitgehend eingedampfte zähe und klebrige Suspension oder Lösung wird auf das gerührte Bett im Rührbehälter 7 aufgesprüht, wobei die Lösung oder Suspension zur Trockenmasse eingedampft wird. Die kontinuierlich erzeugte Trockenmasse wird über die Zellradschleuse 8 unter Aufrechterhaltung des Bettes im Behälter 7 kontinuierlich ausgeschleust. Die Gasphase wird einem Wärmeaustauscher 9 zugeführt, in dem das Lösungsmittel bzw. Suspensionsmedium kondensiert wird. Das kondensierte Lösungsmittel bzw. Suspensionsmedium wird einem gekühlten Sammelbehälter 10 zugeführt. Über Leitung 11 werden nicht kondensierbare Gasbestandteile, z.B. vorher zugeführtes Inertgas, abgezogen. Aus dem Sammelbehälter 10 werden die kondensierten Bestandteile über eine Pumpe 12 oder einen barometrischen Ablauf ausgeschleust.

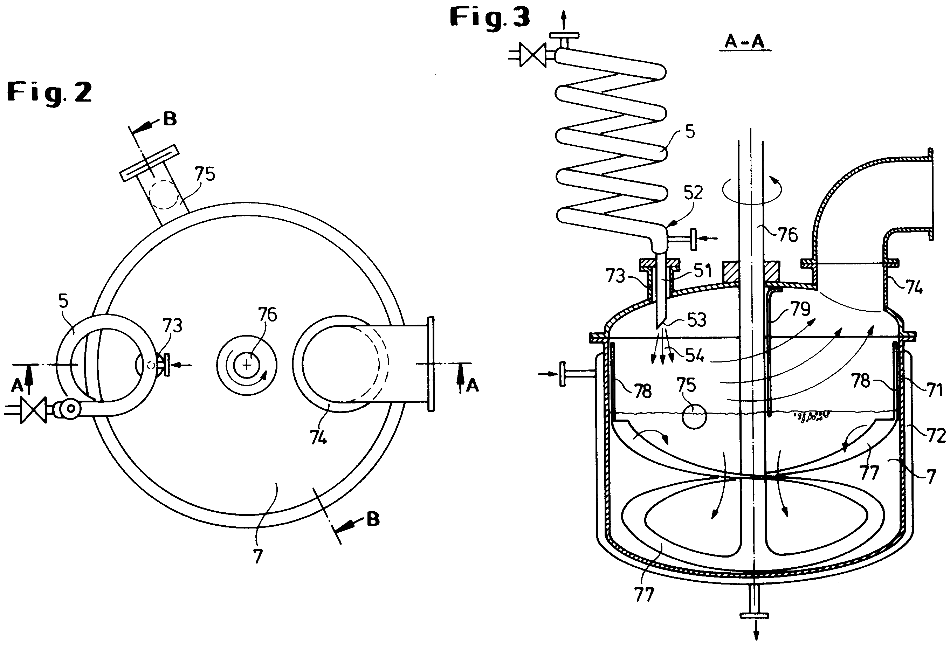

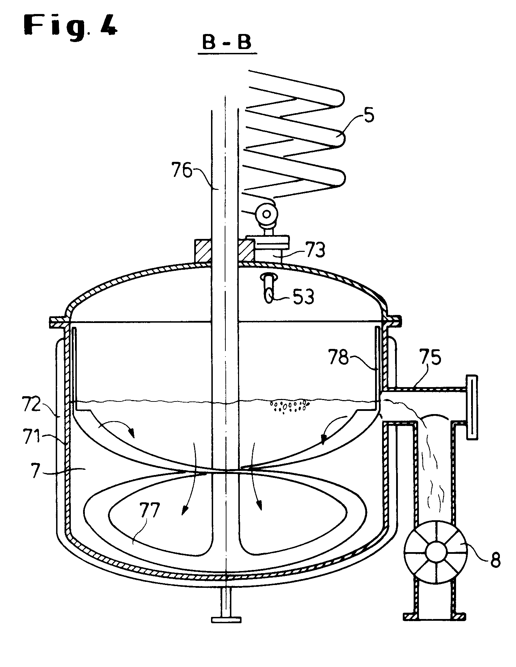

Die Erfindung ist in den Fig. 2 bis 4 detaillierter dargestellt. Das Trenngefäß 7 besteht aus einem im wesentlichen zylindrischen Behälter 71 mit einem Heizmantel 72 und weist einen Einführungsflansch 73 für das Mehrphasenwendelrohr 5, einen Gasabzugsflansch 74 und einen als Überlauf ausgebildeten Feststoffaustragsflansch 75 auf. Über eine nicht dargestellte Antriebseinrichtung wird die Rührerachse 76 mit den wandgängigen Rührarmen 77 angetrieben. Die Rührarme 77 sind vollständig von dem Bett aus bereits erzeugter Trockennasse überdeckt. Zur Erhöhung der Standzeit des Trenngefäßes können ferner mit den Enden der Rührarme 77 fest verbundene, aus dem Bett herausragende Wandabstreifer 78 sowie ein mit der Behälterwand 71 verbundener Abstreifer 79 für die Achse 76 vorgesehen sein. Das Mehrphasenwendelrohr 5 besteht aus dem eigentlichen Eindampfrohr 51 und einem Heizmantel 52. Die Austrittsöffnung 53 des Mehrphasenwendelrohrs 5 befindet sich in einer solchen Höhe innerhalb des Gasraums des Trenngefäßes 7, daß einerseits der mit hoher Geschwindigkeit austretende Gasstrahl 54, von dem die weitgehend eingedampfte viskose Masse mitgerissen wird, die Oberfläche des Bettes aus Trockenmasse nicht zu sehr aufwirbelt und andererseits noch nicht eine solche Auffächerung erfolgt, daß merkliche Anteile der viskosen Masse gegen die Behälterwand gesprüht werden.

Wie aus den Figuren ersichtlich, sind die Rührarme 77 und deren Drehrichtung so ausgebildet, daß die Teilchen des gerührten Bettes an der Behälterwand 71 sowohl von unten nach oben gefordert werden als auch eine Rotationsbewegung um die Rührarmachse 76 ausfuhren. Der Abzug 75 für die Feststoffteilchen ist, wie aus Fig. 2 ersichtlich, vorzugsweise so angeordnet, daß die Feststoffteilchen, nachdem sie von der aus der Austrittsöffnung 53 des Wendelrohres 5 austretenden viskosen Masse besprüht wurden, einen möglichst langen Weg im Trenngefäß 7 zurücklegen. Ferner sind die Austrittsöffnung 53 des Wendelrohres 5 und die Gasabzugsöffnung 74 bezuglich einer vertikalen Schnittebene durch das Trenngefäß 7 gegenüberliegend angeordnet. Als Strömungsquerschnitt des Gasraumes im Sinne der Erfindung ist die vertikale Schnittebene durch den Gasraum des Trenngefäßes 7, entsprechend etwa dem Durchmesser des Trenngefäßes multipliziert mit der Höhe des Gasraumes, anzusehen.

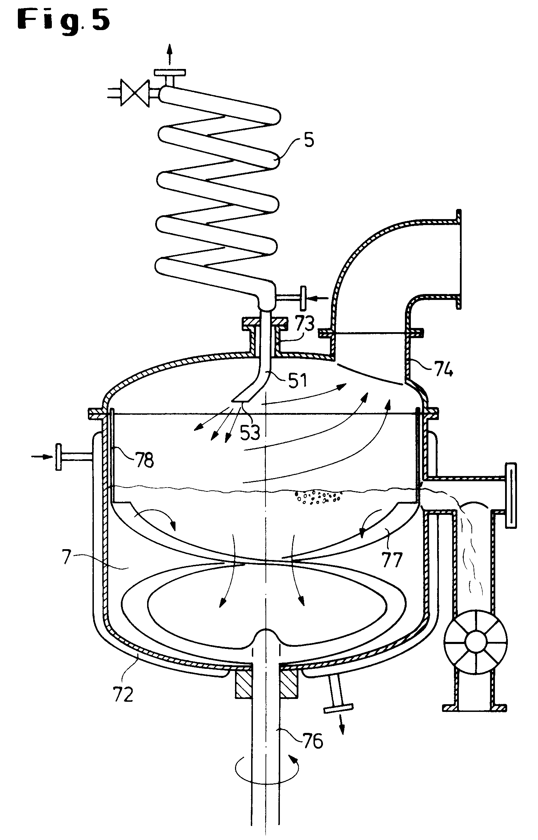

Eine besonders bevorzugte Ausführungsform der vorliegenden Erfindung zeigt Fig. 5. Hierbei ist die Achse 76 des Rührers von unten in den Reaktor eingeführt, so daß die Oberfläche des gerührten Bettes nicht durch die diese durchstoßende Achse 76 gemäß Fig. 3 eingeengt ist. Das Wendelrohr 51 weist vorzugsweise kurz vor dem Auslauf 53 einen Bogen auf, so daß aufgrund der Zentrifugalkräfte am Auslauf bereits eine Trennung von Gas und fließfähiger Phase erfolgt.

Erfindungsgemäß werden Granulate der Trockenmasse mit Teilchengrößen zwischen 3 und 10 mm Durchmesser erhalten. Durch Verkleben mit der viskosen Masse entstehende Verbackungen mehrerer Granulatteilchen werden im gerührten Bett wieder zerbrochen. Feinteilige Partikel, die z.B. durch Abrieb entstehen, sammeln sich am Boden des Bettes, so daß sie nicht ausgetragen werden. Gelangen sie aufgrund der Bewegung des Bettes an die Oberfläche, werden sie mit größeren Teilchen verbacken.

## Patentansprüche

1. Verfahren zum kontinuierlichen Überführen einer fließfähigen flüssigen Masse in eine Feststoffmasse, wobei die Viskosität der flüssigen Masse durch Verdampfung in einer ersten Stufe in einem an sich bekannten Mehrphasenwendelrohr in Gegenwart einer mit hoher Geschwindigkeit strömenden Gasphase erhöht wird und in einer zweiten Stufe in die Feststoffmasse überführt und die Gasphase abgetrennt wird, dadurch gekennzeichnet, daß die flüssige Masse im Anschluß an den Austritt aus dem Mehrphasenwendelrohr auf ein gerührtes Bett aus festem körnigem Gut aufgebracht wird, der Gasraum über dem gerührten Bett einen mindestens 200-fach größeren Strömungsquerschnitt aufweist als das Wendelrohr, und Gasphase und Feststoffphase getrennt aus dem Gasraum bzw. dem Bett abgezogen werden.

2. Verfahren nach Anspruch 1, dadurch gekennzeichnet, daß das Volumen des gerührten Bettes mindestens 30 % der stündlich erzeugten Feststoffmasse beträgt.

3. Verfahren nach Anspruch 1 oder 2, dadurch gekennzeichnet, daß die Achse der Austrittsöffnung des Wendelrohres in Austrittsrichtung keine Richtungskomponente in Strömungsrichtung der Gasphase zum Gasabzug aus dem Gasraum aufweist.

4. Verfahren nach einem der Ansprüche 1 bis 3, dadurch gekennzeichnet, daß als festes körniges Gut ein Material eingesetzt wird, das der zu erzeugenden Feststoffmasse entspricht.

5. Verfahren nach einem der Ansprüche 1 bis 4, dadurch gekennzeichnet, daß eine fließfähige flüssige Masse eingesetzt wird, die bei erhöhter Temperatur in eine Feststoffmasse überfuhrbar ist, insbesondere eine einzudampfende Lösung oder Suspension, wobei Wendelrohr und Bett beheizt werden.

6. Verfahren nach einem der Ansprüche 1 bis 5, dadurch gekennzeichnet, daß in der Gasphase über dem gerührten Bett ein Druck von unterhalb 1 bar aufrechterhalten wird.

7. Vorrichtung zum kontinuierlichen Überführen einer fließfähigen flüssigen Masse in eine Feststoffmasse, enthaltend ein direkt in einen Rührbehälter mündendes Mehrphasenwendelrohr, wobei der Rührbehälter einen mindestens 20-fach größeren Durchmesser aufweist als das Wendelrohr, Mittel zum kontinuierlichen Austrag einer Feststoffphase unter Aufrechterhaltung einer Tiefe des Feststoffbettes, so daß das Bett die Rührarme überdeckt und ein Gasraum oberhalb des Bettes verbleibt, der einen mindestens 200-fach größeren Strömungsquerschnitt aufweist als das Wendelrohr, sowie einen vom Feststoffaustrag getrennten Gasabzug.

8. Vorrichtung nach Anspruch 7, wobei die Rührarme des Rührbehälters wandgängig ausgebildet sind.

9. Vorrichtung nach Anspruch 7 oder 8, wobei die Achse der Austrittsöffnung des Wendelrohres in Austrittsrichtung eine Richtungskomponente entgegen der Gasströmungsrichtung zum Gasabzug aufweist.

10. Vorrichtung nach einem der Ansprüche 7 bis 9, wobei der Rührbehälter auf seiner Innenfläche oberhalb des Bettes Abstreifer aufweist.
